# EUROPÄISCHE PATENTANMELDUNG

(11) **EP 2 392 873 A2**
(43) Veröffentlichungstag der Anmeldung: **07.12.2011**
(21) Anmeldenummer: 11003896.5
(22) Anmeldetag: 12.05.2011
(51) Int. Cl.: F24J 2/52

(54) **Variables Tragsystem**

(30) Priorität: 14.05.2010 DE 202010006808 U
(71) Anmelder: Fluhar, Damir, 78554 Aldingen (DE)
(72) Erfinder: Fluhar, Damir, 78554 Aldingen (DE)
(74) Vertreter: Neymeyer, Franz

(57) **Zusammenfassung**

Die Erfindung betrifft ein Tragsystem mit einem auf einer Vertikalstütze in unterschiedlichen Winkelpositionen zur Vertikalstütze aufsetzbaren Querträger (50), welcher durch wenigstens eine Stützstrebe (18, 19) in der vorgesehenen Winkelposition abstützbar ist. Erfindungsgemäß wird ein kostengünstiges Tragsystem mit geringem Gewicht zur Verfügung gestellt, welches sich dadurch auszeichnet, dass der Querträger (50) aus einem gebogenen Blechbauteil (1) besteht, und dass die Stützstrebe (18, 19) aus einem Wandelement (16) des Blechbauteils (1) ausgeschnitten und mit dem Wandelement (16) mit einem Endbereich (20, 21) über wenigstens einen Verbindungsabschnitt (22, 23, 24, 25) in Verbindung steht, und dass die Stützstrebe (18, 19) aus dem Wandelement (16) durch Biegen des Verbindungsabschnittes (22, 23, 24, 25) in eine Stützposition bringbar ist, in welcher der an der Vertikalstütze in einer vorbestimmten Winkelstellung angeordnete Querträger (50) abstützbar ist.

## Beschreibung

Die Erfindung betrifft ein Tragsystem mit einem auf einer Vertikalstütze in unterschiedlichen Winkelpositionen zur Vertikalstütze aufsetzbaren Querträger, welcher durch wenigstens eine Stützstrebe in der vorgesehenen Winkelposition abstützbar ist.

Tragsysteme der gattungsgemäßen Art sind schon seit langem bekannt und werden insbesondere verwendet, um beispielsweise Parkplätze und dgl. mit einem Dach zu versehen. In neuerer Zeit werden als Dachabdeckungen hierzu auch Solarmodule oder Solarkollektoren verwendet, um die Parkplatzfläche zur Energieerzeugung, sei es elektrisch oder thermisch, auszunutzen. Um nun solche Solarmodule oder -kollektoren in entsprechendem Bodenabstand anbringen zu können, werden Tragsysteme eingesetzt, welche mit Vertikalstützen, Querträgern und Längsträgern ausgestattet sind. Um den Wasserablauf bei einer solchen Dachfläche sicherzustellen, werden diese Dachflächen in der Regel mit einer gewissen Neigung gegenüber einer Horizontalen aufgebaut. Hierzu ist es somit notwendig, den Querträger, auf welchem diese Abdeckungen zusammen mit den Längsträgern aufliegen, geneigt zu einer solchen Horizontalen im oberen Endbereich der Vertikalstütze anzuordnen. Um den jeweils gewählten Anstellwinkel zu fixieren, ist mindestens eine schräg zwischen dem Querträger und der Vertikalstütze angeordnete Stützstrebe vorgesehen, welche in entsprechender Art und Weise über Winkelverschraubungen oder dgl. mit dem Querträger und der Vertikalstütze in Verbindung steht.

Als Vertikalstütze sowie Querträger kommen hier in der Regel Walzprofile in Frage, welche in unterschiedlichen Dimensionen am Markt verfügbar sind. Durch die Verwendung solcher Profile ist es notwendig, zur Festlegung des Querträgers im oberen Endbereich der Vertikalstütze besondere Lagerlaschen oder dgl. anzubringen. Diese werden in der Regel als separate Bauteile ausgebildet und mit dem Querträger und/oder der Vertikalstütze verschraubt oder verschweißt. Zur Anlenkung der Stützstrebe oder der Stützstreben ist es ebenfalls erforderlich, diverse Winkelprofile oder dgl. einzusetzen, welche mit dem Querträger und/oder der Vertikalstütze zu verschrauben sind.

Die bisherige Art des Aufbaus eines solchen Tragsystems zeichnet sich einerseits insbesondere durch ein relativ hohes Eigengewicht aus und andererseits ist auch ein relativer hoher Montageaufwand vor Ort gegeben, was zu höheren Gestehungskosten führt.

Demgemäß liegt der Erfindung die Aufgabe zugrunde, ein variables Tragsystem mit einer Vertikalstütze und einem in unterschiedlichen Winkelpositionen zur Vertikalstütze aufsetzbaren Querträger zu Verfügung zu stellen, welches äußerst leicht ist und in einfacher Weise kostengünstig herstellbar ist.

Die Aufgabe wird erfindungsgemäß zusammen mit den Merkmalen des Oberbegriffes des Anspruches 1 dadurch gelöst, dass der Querträger aus einem gebogenen Blechbauteil besteht, und dass die Stützstrebe aus einem Wandelement des Blechbauteils ausgeschnitten und mit dem Wandelement mit einem Endbereich über wenigstens einen Verbindungsabschnitt in Verbindung steht, und dass die Stützstrebe aus dem Wandelement durch Biegen des Verbindungsabschnittes in eine Stützposition bringbar ist, in welcher der an der Vertikalstütze in einer vorbestimmten Winkelstellung angeordnete Querträger abstützbar ist.

Durch die erfindungsgemäße Ausgestaltung wird ein variables Tragsystem zu Verfügung gestellt, dessen Bauteile sich durch ein äußerst geringes Eigengewicht auszeichnen. Das Weiteren besteht insbesondere der Querträger aus einem einstückigen Blechbauteil, welches nach Fertigstellung insbesondere auch die Stützstrebe oder die Stützstreben bildet. Dazu wird der Querträger aus einem gebogenen Blechbauteil hergestellt, aus welchem die Stützstrebe "ausgeschnitten" ist. Zum Ausschneiden der Stützstrebe(n) aus dem Blechbauteil bzw. einem Wandelement des Blechbauteils können hier beispielsweise Laserschnittverfahren eingesetzt werden. Dabei ist vorgesehen, dass die Stützstrebe nicht vollständig aus dem Wandelement herausgeschnitten wird, sondern dass die Stützstrebe mit dem Wandelement mit einem ihrer Endbereiche über einen Verbindungsabschnitt in Verbindung stehen bleibt. Dieser Verbindungsabschnitt ist dabei derart bezüglich seines Biegewiderstandsmomentes dimensioniert, dass die Stützstrebe vor Ort aus dem Wandelement in die erforderliche Winkelstellung relativ zum Querträger "ausgebogen" werden kann. Vor dem Transport zum Aufstellungsort verbleibt die Stützstrebe in der Ebene des Wandelementes, so dass sich hieraus ein geringes Transportvolumen ergibt. Außerdem wird dadurch sicher ein versehentliches Verbiegen der Stützstrebe(n) während des Transports verhindert.

Aufgrund des manuell biegbaren Verbindungsabschnittes wird insbesondere die Montage des Querträgers im oberen Endbereich der Vertikalstütze erheblich vereinfacht. Insbesondere sind keinerlei weitere Maßnahmen oder Bauteile, wie beispielsweise das Anbringen von zusätzlichen, separaten Stützlaschen oder Stützwinkeln sowohl am Querträger als auch an der Vertikalstütze erforderlich.

Weitere vorteilhafte Ausgestaltungen der Erfindung sind den weiteren Unteransprüchen zu entnehmen.

So kann gemäß Anspruch 2 vorgesehen sein, dass die Stützstrebe in ihrem freien, dem Verbindungsabschnitt gegenüberliegenden Endbereich ein Montageauge aufweist, welches in der Stützposition der Stützstrebe im Wesentlichen parallel zur Vertikalstütze verlaufend abgebogen und mit einem Durchbruch versehen ist, über welchen das Montageauge mit der Vertikalstütze verschraubbar ist. Für diese Verschraubung weist die Vertikalstütze in einem vorab vorgesehenen Bereich einen entsprechenden Durchbruch auf, so dass eine Verschraubung einfach möglich ist. Je nach Wandstärke des für den Querträger verwendeten Bleches kann dieses Abbiegen des Montageauges an der Stützstrebe schon in einem Herstellungsschritt unmittelbar nach dem Ausschneiden der Stützstrebe aus dem Wandelement erfolgen. Insbesondere ist hier erfindungsgemäß vorgesehen, dass das Blechbauteil während des Ausschneidens der Stützstrebe(n) als einheitlich flächiges Bauteil vorliegt. Nachdem die erforderlichen Ausschnitte aus dem Wandelement hergestellt sind, kann nun in einem Biegeprozess der Querträger beispielsweise in U- oder C-Form profiliert gebogen werden. Während dieses Biegeprozesses können auch gleichzeitig die Montageaugen bzw. das Montageauge der jeweiligen Stützstrebe vorgebogen werden. Der Biegewinkel ist insoweit vorbekannt, da der Aufstellungsort sowie die oberseitig auf den Querträgern anzubringende Abdeckung mit der vorgesehenen Neigung zur Horizontalen schon bei der Bestellung des Tragsystems anzugeben sind. D. h., dass das Montageauge, insbesondere bei größeren Wandstärken des Blechbauteils von beispielsweise 3 mm bis 5 mm, nicht mehr von Hand unter großem Aufwand gebogen werden muss.

Weiter kann gemäß Anspruch 3 vorgesehen sein, dass die Stützstrebe eine profilierte Querschnittsform aufweist. Diese profilierte Querschnittsform, welche wellenartig ausgebildet sein kann, ist während des Biegeprozesses, insbesondere des Abbiegens des Montageauges gleichzeitig herstellbar. Durch diese profilierte Ausgestaltung der Stützstrebe erhält diese eine äußerst hohe Knicksteifigkeit, so dass auch bei größerer Belastung ein Abknicken der Stützstrebe sicher vermieden wird.

Weiter kann, wie bereits oben erwähnt, gemäß Anspruch 4 vorgesehen sein, dass der Querträger ein U-förmiges oder C-förmiges Querschnittsprofil aufweist, und dass das Wandelement, aus welchem die Stützstrebe ausgeschnitten und abgebogen ist, in Einbaulage des Querträgers an der Vertikalstütze quer zur Vertikalstütze verläuft, und dass am Wandelement des Querträgers zwei etwa rechtwinklig abgebogene Seitenwände vorgesehen sind, welche zur Montage an der Vertikalstütze jeweils ein mit einem Durchbruch versehenes Lagerauge bilden. Diese Merkmalskombination gemäß Anspruch 4 stellt ein einheitliches einstückiges, als Querträger ausgebildetes Bauteil zur Verfügung, welches sämtliche Elemente zum Anbringen an einer Vertikalstütze enthält. Insoweit ist insbesondere kein größerer Aufwand mehr zu betreiben, um den Querträger im oberen Endbereich einer Vertikalstütze in der vorgegebenen Winkelposition anbringen zu können.

Weiter kann gemäß Anspruch 5 vorgesehen sein, dass der Verbindungsabschnitt zwischen dem Wandelement und der Stützstrebe bezüglich seines Biegewiderstandmomentes derart ausgestaltet ist, dass die Stützstrebe manuell aus der Ebene des Wandelementes heraus biegbar ist. Durch diese Ausgestaltung ist, wie bereits oben angedeutet, eine Anpassung der Winkelstellung der Stützstrebe relativ zum Querträger in einfacher Weise manuell vor Ort beim Aufbau des Tragsystems durchführbar. Aufgrund dessen, dass diese Stützstrebe aus dem Wandelement manuell abgebogen werden kann, kann diese während des Transports in der Ebene des Wandelementes verbleiben, so dass sich hieraus ein geringes Transportvolumen des Querträgers ergibt.

Weiter kann gemäß Anspruch 6 der Querträger in wenigstens einem seiner Endbereiche mit wenigstens einer aus dem Wandelement ausgeschnittenen Montageplatte versehen sein. Diese Montageplatte ist aus der Ebene des Wandelementes heraus gebogen und in ihrer abgebogenen Position über einen Biegeabschnitt mit dem Wandelement feststehend verbunden. Diese Ausgestaltung ist insbesondere bei einer geneigten Anordnung des Querträgers auf der Vertikalstütze von Vorteil, da diese Montageplatte schon beim Aufbau ein Abrutschen eines auf den Querträger aufsetzbaren Längsträgers oder auch einer Abdeckplatte verhindert. Auch diese Montageplatte ist somit einstückiger Bestandteil des Querträgers, so dass auch hier keine zusätzlichen Montagearbeiten zum Anbringen der Montageplatte am Querträger erforderlich sind.

Weiter kann hierzu gemäß Anspruch 7 vorgesehen sein, dass im jeweiligen Endbereich des Querträgers zwei voneinander beabstandete, aus der Ebene des Wandelementes etwa rechtwinklig abgebogene Montageplatten vorgesehen sind, welche für eine feststehende Montage eines Längsträgers mit langlochartigen Durchbrüchen versehen sind. Durch diese doppelte Anordnung von zwei einander benachbarten und zueinander beabstandeten Montageplatten ist somit ein Längsträger nach der Montage des Querträgers auf der Vertikalstütze in einfacher Weise, insbesondere durch eine einzelne Person, auf den Querträger im entsprechenden Endbereich aufsetzbar. Dabei ist der Abstand der Montageplatten voneinander derart bemessen, dass der Längsträger passend zwischen diese beiden Montageplatten einsetzbar ist. Aufgrund der langlochartigen Durchbrüche ist ebenfalls eine einfache Verschraubung dieses Längsträgers mit dem Querträger bzw. dessen Montageplatten möglich. Auch durch diese Maßnahme wird der Aufbau eines aus dem erfindungsgemäßen Querträgers und der Vertikalstütze bestehenden Tragsystems erheblich vereinfacht.

Gemäß Anspruch 8 kann weiter vorgesehen sein, dass die Vertikalstütze zwei voneinander beabstandete Seitenwände bildet, mit welchen die Vertikalstütze passend in den Querträger einsetzbar ist, und dass die Seitenwände der Vertikalstütze im Verbindungsbereich zum Querträger langlochartige Durchbrüche aufweisen. Durch diese Ausgestaltung wird ein äußerst geringes Eigengewicht der Vertikalstütze erreicht, da diese ebenfalls aus einem Blechbauteil hergestellt ist. Aufgrund der langlochartigen Durchbrüche in den Seitenwänden der Vertikalstütze ist der Querträger auch in unterschiedlichen Winkelstellungen zur Vertikalstütze bzw. zu einer horizontalen Ebene im oberen Endbereich der Vertikalstütze variabel ansetzbar. Zur Winkeleinstellung sind die langlochartigen Durchbrüche von Vorteil.

Gemäß Anspruch 9 kann weiter vorgesehen sein, dass die Vertikalstütze aus einem U-förmig oder C-förmig profilierten Blechbauteil gebildet ist. Wie schon oben erwähnt, wird durch diese Ausgestaltung ein äußerst geringes Eigenwicht der Vertikalstütze erreicht. Zum anderen ergibt die U-förmig oder C-förmig profilierte Ausgestaltung der Vertikalstütze eine äußerst hohe Knicksteifigkeit, wodurch äußerst hohe Traglasten von der Vertikalstütze aufnehmbar sind.

Anhand der Zeichnung wird die Erfindung nachfolgend anhand eines Ausführungsbeispiels näher erläutert. Es zeigt:
- Fig. 1: eine Draufsicht auf ein ebenes Blechbauteil mit vorgeschnittenen Außenkonturen sowie vorgeschnittenen Stützstreben und Montageplatten;
- Fig. 2: einen vergrößerten Ausschnitt der verkürzt dargestellten Stützstreben aus Fig. 1;
- Fig. 3: eine vergrößerte Darstellung einer Montageplatte des Querträgers aus Fig. 1;
- Fig. 4: eine Seitenansicht eines erfindungsgemäßen Querträgers mit sich in der Ebene des oberen Wandelementes befindenden Stützstreben sowie aus dieser Ebene vertikal nach oben abgebogenen Montageplatten;
- Fig. 5: eine Ansicht V des Querträgers aus Fig. 4;
- Fig. 6: den Querträger aus Fig. 4 mit vertikal nach unten "ausgebogenen" Stützstreben in Seitenansicht;
- Fig. 7: eine perspektivische Darstellung des Querträgers aus Fig. 6 in seinem "Montagezustand";
- Fig. 8: eine Seitenansicht einer Vertikalstütze;
- Fig. 9: eine Frontansicht VIII der Vertikalstütze aus Fig. 8;
- Fig. 10: einen Schnitt X-X der Vertikalstütze aus Fig. 8;
- Fig. 11: einen Schnitt XI-XI der Vertikalstütze aus Fig. 9;
- Fig. 12: einen Teilschnitt eines an einer Vertikalstütze in einer vorbestimmten Winkelstellung montierten Querträgers.

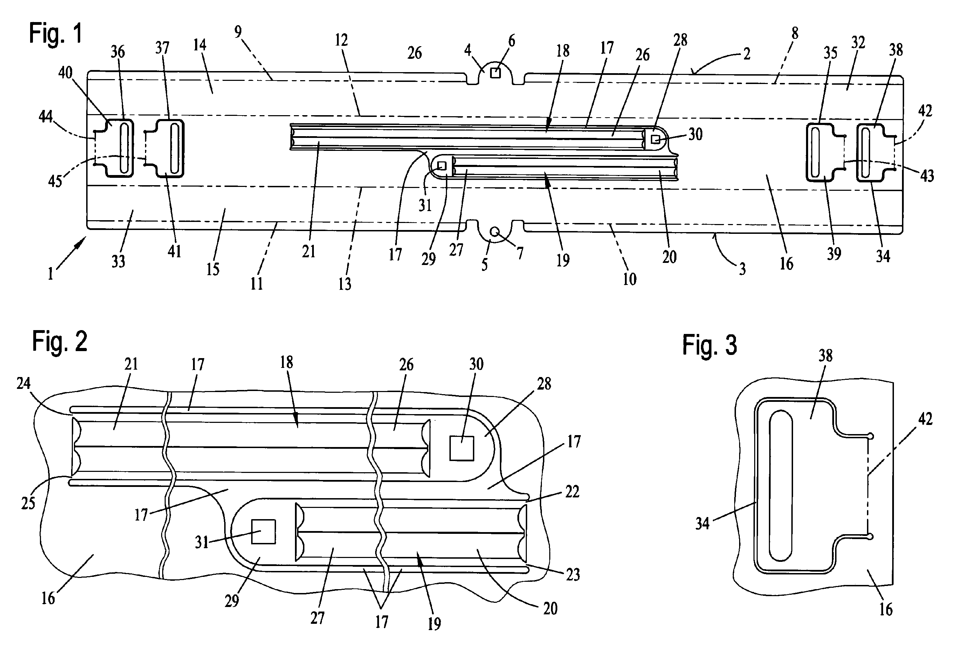

Fig. 1 zeigt eine Draufsicht auf ein bereits vorgeschnittenes Blechbauteil 1, aus welchem ein Querträger der erfindungsgemäßen Art hergestellt wird. Dementsprechend weist das Blechbauteil 1 schon die für die spätere Formgestaltung des Querträgers notwendige Außenkontur auf.

Beim vorliegenden Ausführungsbeispiel sind im Bereich der beiden Längskanten 2 und 3 des Blechbauteils 1 zwei Lageraugen 4 und 5 vorgesehen. Das Lagerauge 4 ist vorliegend mit einem quadratischen Durchbruch 6 versehen, während das Lagerauge 5 eine einfache Durchgangsbohrung 7 aufweist. Im fertig gebogenen, den Querträger bildenden Zustand des Blechbauteils 1 verlaufen diese beiden Lageraugen 4, 5 mit ihrem Durchbruch bzw. ihrer Durchgangsbohrung fluchtend zueinander, so dass diese über beispielsweise eine sog. Schlossschraube an einer Vertikalstütze montierbar sind.

In Fig. 1 sind dabei die Biegelinien 8, 9, 10, 11, 12, 13 zur Biegung des späteren Querträgers in Phantomlinien dargestellt. Durch die Biegung im Bereich der Biegelinien 12 und 13 werden zu den Längskante 2 und 3 hin Seitenwände 14 und 15 gebildet, welche an einem mittleren Wandelement 16 angeformt sind. Dieses mittlere Wandelement ist mit einem ersten "Freischnitt" 17 versehen, durch welchen zwei "zentrale" Stützstreben 18 und 19 ausgeschnitten sind. Dies Stützstreben 18, 19 sind nicht vollumfänglich "ausgeschnitten", sondern stehen mit ihrem einen Endbereich 20 bzw. 21 jeweils über wenigstens einen Verbindungsabschnitt, beim vorliegenden Ausführungsbeispiels über jeweils zwei Verbindungsabschnitte 22, 23 bzw. 24, 25, mit dem mittleren Wandelement 16 einstückig in Verbindung. Dies ist insbesondere aus der vergrößerten Darstellung der Fig. 2 erkennbar, in welcher sowohl die Stützstreben 18 und 19 als auch das mittlere Wandelement 16 verkürzt abgebildet sind. Im Weiteren ist aus Fig. 2 auch der Freischnitt 17 erkennbar.

Weiter ist aus den Fig. 1 und 2 erkennbar, dass die beiden Stützstreben 18 und 19 jeweils in ihrem den Verbindungsabschnitten 22, 23 bzw. 24, 25 gegenüber liegenden "freien" Endbereich 26 bzw. 27 ein Montageauge 28 bzw. 19 aufweisen, welches jeweils mit einem rechteckförmigen Durchbruch 30 bzw. 31 versehen ist. Über diese Montageaugen 28, 29 mit ihren Durchbrüchen 30, 31 sind diese Stützstreben 18, 19 an einer Vertikalstütze feststehend fixierbar, insbesondere mit dieser verschraubbar. Je nach Anordnung einer zugeordneten Bohrung oder Verschraubung an der Vertikalstütze ist somit ein an der Vertikalstütze angeordneter Querträger in einer vorbestimmten Winkelstellung zu einer Horizontalen bzw. zur Vertikalstütze fixierbar.

Weiter ist aus Fig. 1 erkennbar, dass in den beiden Endbereichen 32, 33 des Blechbauteils 1 weitere Freischnitte 34, 35 bzw. 36, 37 vorgesehen sind. Durch jeden der Freischnitte 34, 35, 36 bzw. 37 wird jeweils eine Montageplatte 38, 39, 40 bzw. 41 gebildet, welche jeweils über einen in Phantomlinien dargestellten Biegeabschnitt 42, 43, 44 bzw. 45 mit dem Wandelement 16 in Verbindung stehen.

Fig. 3 zeigt hier zur Verdeutlichung eine vergrößerte Darstellung der Montageplatte 38 mit dem zugehörigen Freischnitt 34 in dem Wandelement 16 sowie dem Biegeabschnitt 42. Durch diese Biegeabschnitte 42, 43, 44, 45 ist die jeweilige Montageplatte 38, 39, 40 bzw. 41 aus der Ebene des Wandelementes 16 heraus in eine Montagestellung biegbar, vorzugsweise rechtwinklig zum Wandelement 16.

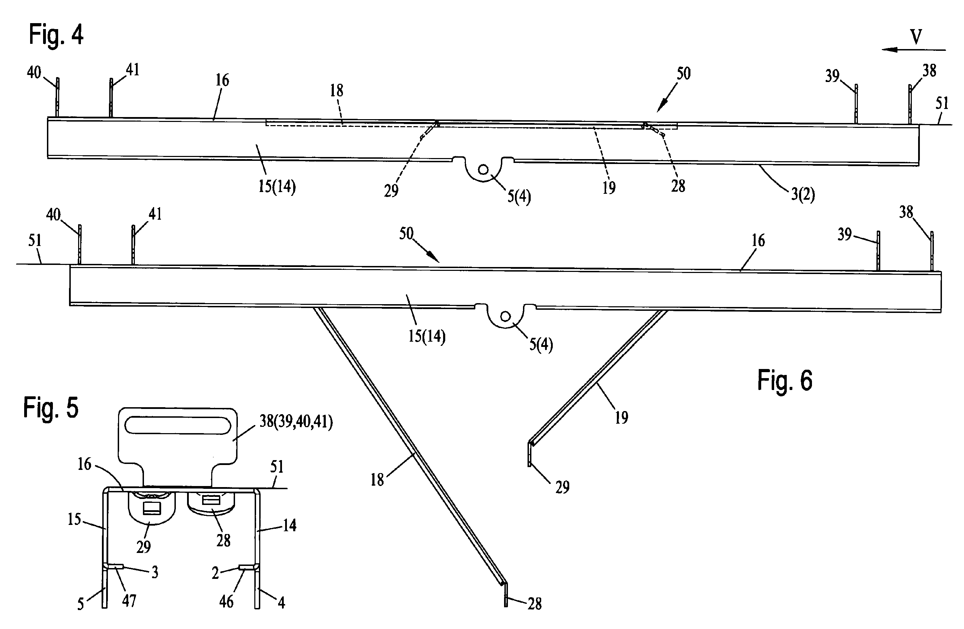

In den Fig. 4 bis 6 ist ein aus dem Blechbauteil 1 hergestellter Querträger 50 dargestellt.

Fig. 4 zeigt hierzu eine "Transportstellung" des Querträgers 50. In dieser Transportstellung befinden sich die beiden aus Fig. 1 erkennbaren und in Fig. 4 in gestrichelten Linien dargestellten Stützstreben 18 und 19 in einer in der Ebene 51 des mittleren Wandelementes 16, so dass diese insbesondere für den Transport des Querträgers 50 nicht in störender Weise aus dem Querträger 50 nach unten herausragen. Die beiden Montageaugen 28, 29 sind bereits in eine vorbestimmte Montageposition aus der Ebene 51 des Wandelementes 16 abgebogen.

Wie aus Fig. 5 ersichtlich ist, liegen die beiden Montageaugen 28 und 29 in diesem abgebogenen Zustand zwischen den beiden - beim vorliegenden Ausführungsbeispiel rechtwinklig zum Wandelement 16 verlaufenden - Seitenwänden 14und 15. Weiter ist aus Fig. 5 erkennbar, dass die Seitenwände 14 und 15 mit ihrer jeweiligen Längskante 2 bzw. 3 nach innen abgebogen sind und jeweils Stabilisierungsstege 46 bzw. 47 bilden. Durch diese Stabilisierungsstege 46, 47 erhält der Querträger 50 eine größere Steifigkeit.

Weiter ist aus den Fig. 4, 5 und 6 erkennbar, dass die Montageplatten 38, 39 40 und 41 aus der Ebene 51 des Wandelementes 16 vertikal nach oben verlaufend ausgebogen sind. Weiter sind die Montageplatten 38, 39, 40 und 41 jeweils mit einem langlochartigen Durchbruch (Fig. 1) versehen, über welchen die einander zugeordneten Montageplatten 38 und 39 bzw. 40 und 41 mit einem Längsträger (in der Zeichnung nicht dargestellt) feststehend koppelbar sind.

Zur Lagerung des Querträgers 50 an einer Vertikalstütze sind die beiden Lageraugen 4 und 5 vorgesehen, welche im gebogenen Zustand des Querträgers 50 nach unten vorstehen und die jeweils zugehörige Seitenwand 14 bzw. 15 zumindest teilweise nach unten überragen. Dementsprechend weisen die Lageraugen 4 und 5 auch einen seitlichen Abstand voneinander auf, welcher dem Abstand der Seitenwände14 und 15 entspricht. Die nach innen gebogenen Stabilisierungsstege 46 und 47 sind vorliegend im Bereich der Lageraugen 4 und 5 unterbrochen, so dass eine Vertikalstütze in diesem Bereich zwischen den beiden Seitenwänden 14 und 15 in unterschiedlichen, vorbestimmten Winkelstellungen aufgenommen werden kann.

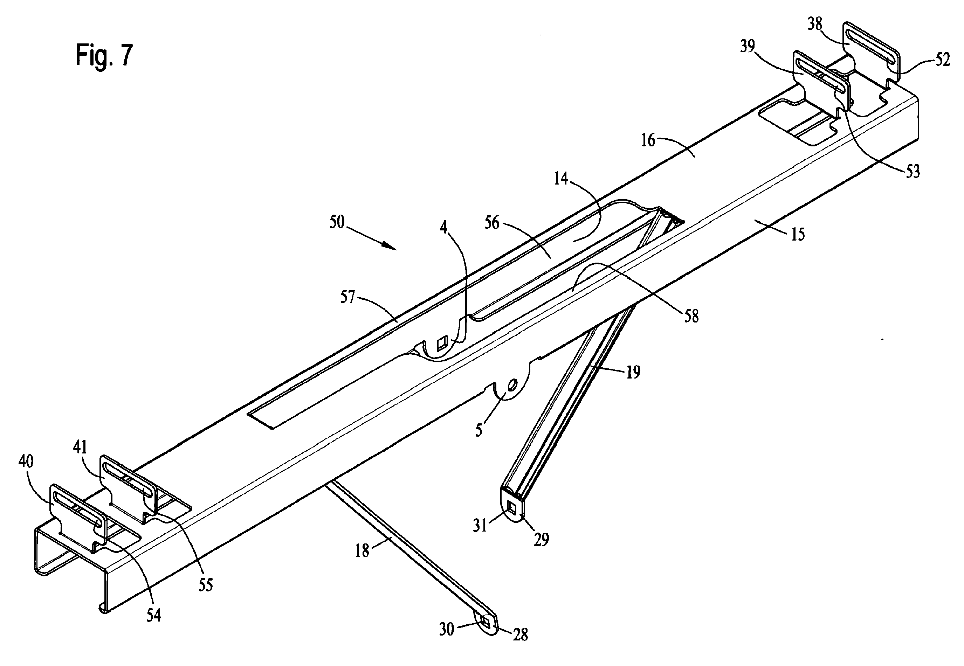

In den Fig. 4 und 5 sind die beiden Stützstreben 18 und 19 in ihrer Transportstellung dargestellt und stehen nicht nach unten über den Querträger 50 hinaus. Damit ergibt sich ein relativ kleines Transportvolumen für den Querträger 50. Die Verbindungsabschnitte 22, 23 bzw. 24, 25 der Stützstreben 18, 19 zum mittleren Wandabschnitt 16 hin sind derart bezüglich ihres Biegewiderstandsmomentes ausgestaltet, dass die Stützstreben 18, 19 aus dem Wandabschnitt 16 bzw. der Ebene 51 des Wandabschnittes 16 manuell herausgebogen werden können. D. h., dass der Querträger 50 vor Ort in seine endgültige Formgebung zum Aufsetzen auf eine Vertikalstütze gebracht werden kann. Diese "Montagestellung" ist beispielhaft in den Fig. 6 und 7 dargestellt.

Es ist erkennbar, dass die Montageaugen 28 und 29 in der in den Fig. 6 und 7 dargestellten abgebogenen "Montagestellung" der Stützstreben 18 und 19 im Wesentlichen vertikal ausgerichtet sind und somit mit einer vertikal verlaufenden Vertikalstütze koppelbar sind. Dazu sind die in den Montageaugen 28 und 29 angeordneten Durchbrüche 30 und 31 vorgesehen. Weiter ist aus Fig. 7 erkennbar, dass die Montageplatten 38, 39 und 40, 41 jeweils voneinander beabstandet sind und einen Freiraum zwischen sich bilden, in welchen ein entsprechend dimensionierter Längsträger einsetzbar ist. Es ist leicht vorstellbar, dass ein solcher Längsträger über die langlochartigen Durchbrüche 52, 53 bzw. 54, 55 der Montageplatten 38, 39 bzw. 40, 41 mit diesen feststehend beispielsweise verschraubbar ist. Durch diese vertikal nach oben vorstehenden Montageplatten 38, 39 und 40, 41 wird insbesondere das Aufsetzen eines Längsträgers erheblich vereinfacht, da bei einer Schrägstellung des Querträgers zu einer Horizontalen der Längsträger zwischen den Montageplatten 38, 39 bzw. 40, 41 passend aufgenommen wird und somit nicht vom Querträger abrutschen kann. Damit ist ein Längsträger auf den Querträger von einer Person aufsetzbar.

Die einstückige Ausbildung des Querträgers 50 mit seinen Stützstreben 18, 19 sowie seinen Montageplatten 38, 39, 40 und 41 zeichnet sich durch ein äußerst geringes Eigengewicht aus. Des Weiteren ist die Montage vor Ort äußerst einfach durchführbar. Durch einfaches Ausbiegen der Stützstreben 18, 19 aus der Ebene 51 des mittleren Wandelements 16 können diese in ihrer schräg zum Querträger 50 verlaufenden Ausrichtung an die jeweils vorab festgelegte Winkelposition des Querträgers 50 auf eine Vertikalstütze angepasst werden. Da diese Winkelposition des Querträgers schon in der Planungsphase zum Erstellen einer "Überdachung" beispielsweise eines Parkplatzes bekannt ist, können auch die Montageaugen 28 und 29 schon vorab in die korrekte Winkelposition zur jeweiligen Stützstrebe 18 bzw. 19 gebracht werden, wie dies beispielhaft in den Fig. 4 und 5 dargestellt ist. D. h., dass diese Montageaugen 28, 29 maschinell während des Biegeprozesses des gesamten Querträgers 50 in die korrekte Winkelstellung zur Stützstrebe 18 bzw. 19 gebracht werden können und somit eine manuelle Verformung vor Ort nicht notwendig ist.

Auch ist in Fig. 7 erkennbar, dass der Ausschnitt 56 der Stützstreben 18 und 19 nicht die komplette Breite des Wandelementes 16 umfasst. Damit werden im oberen Endbereich der Seitenwände 14 und 15 nach innen vorstehende Stege 57 und 58 gebildet, welche für eine ausreichende Stabilität und Steifigkeit des Querträgers 50 in diesem Bereich sorgen.

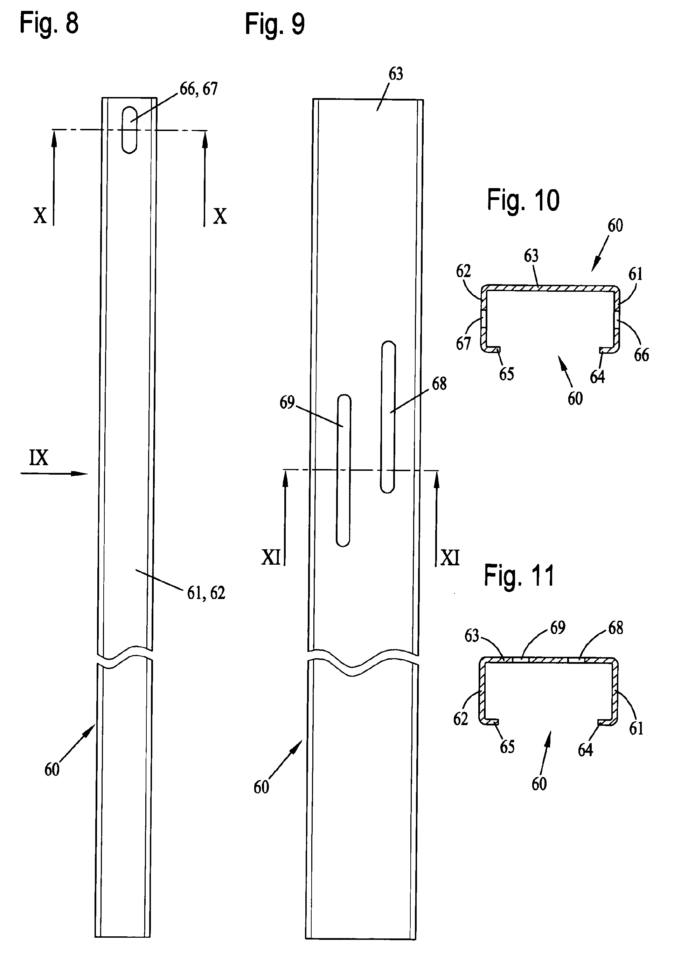

Die Fig. 8 bis 11 zeigen eine als Blechbiegeteil ausgebildete Vertikalstütze 60, auf welche der Querträger 50 nach den vorangegangenen Zeichnungsfiguren passend aufsetzbar ist.

Aus den Fig. 10 und 11 ist erkennbar, dass die Vertikalstütze 60 C-förmig gebogen ausgebildet ist und zwei Seitenwände 61 und 62 bildet, welche über eine Querwand 63 miteinander in Verbindung stehen. In ihren freien Endbereichen bilden die Seitenwände 61 und 62 jeweils einen nach innen gerichteten Steg 64 bzw. 65, wodurch die Vertikalstütze 60 eine äußerst hohe Knicksteifigkeit erhält. Im oberen Endbereich sind die beiden Seitenwände 61 und 62 jeweils mit einem langlochartigen Durchbruch 66 bzw. 67 versehen, welche zur variablen Lagerung eines aufzusetzenden Querträgers 50 dienen. Unterhalb dieser Durchbrüche 66 und 67 sind in der Querwand 63 zwei parallel zueinander verlaufende und in ihrer Höhe versetzt angeordnete Langlöcher 68 und 69 vorgesehen, welche zur variablen Festlegung der Montageaugen 28 und 29 der Stützstreben 18 und 19 des Querträgers 50 dienen. Diese beiden Langlöcher 68 und 69 sind in Fig. 11 im Schnitt erkennbar.

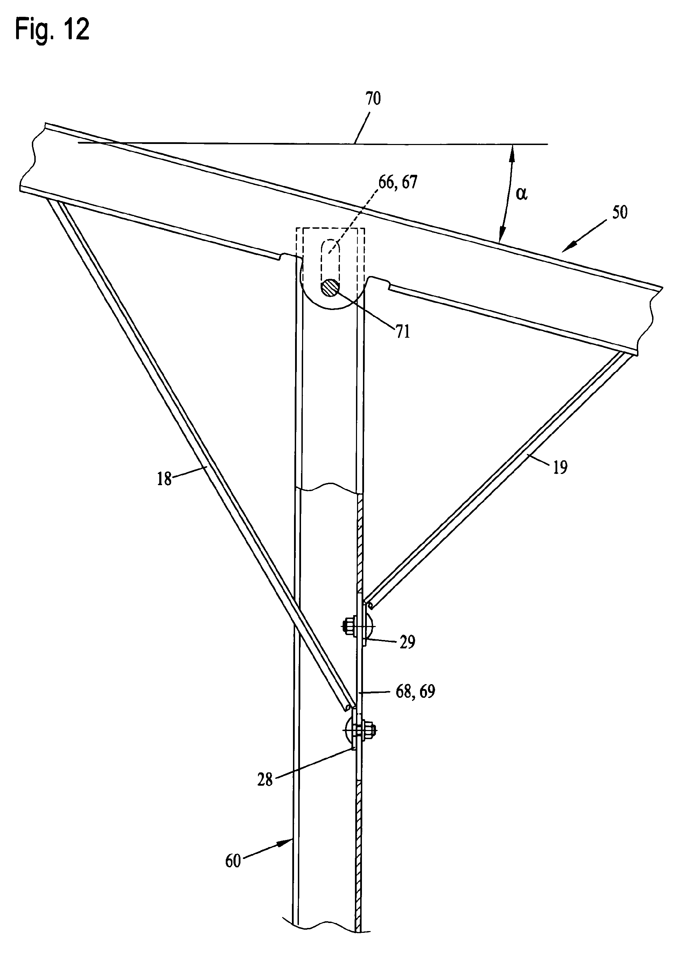

Fig. 12 zeigt eine schematische Teilansicht eines auf die Vertikalstütze 60 aus den Fig. 8 bis 11 aufgesetzten Querträgers 50 aus Fig. 7. Der Querträger 50 ist dabei in Fig. 12 verkürzt dargestellt, so dass dessen Montageplatten 38, 39 und 40, 41 nicht erkennbar sind. Der Querträger 50 verläuft in der in Fig. 12 dargestellten Montagestellung um einen vorbestimmten Neigungswinkel α schräg zu einer Horizontalen 70. Dieser Neigungswinkel α wird bei der Planung einer Überdachung im Voraus bestimmt und kann unterschiedliche Werte annehmen. Sollen auf den Querträger 50 beispielsweise Solarmodule oder Solarkollektoren aufgesetzt werden, so kann dieser Neigungswinkel α zur möglichst optimalen Ausrichtung der Module oder Kollektoren beispielsweise 45° betragen. Dieser Neigungswinkel α kann auch negativ sein oder den Wert "0" annehmen, so dass der Querträger im letzteren Fall horizontal verläuft.

Weiter ist aus Fig. 12 erkennbar, dass der Querträger 50 im oberen Endbereich der Vertikalstütze 60 in den gestrichelt erkennbaren, langlochartigen Durchbrüchen 66, 67 der Vertikalstütze 60 über einen Lagerbolzen 71 schwenkbar gelagert ist. Dieser Lagerbolzen 71 kann unterschiedlich ausgestaltet sein und auch als Schraubverbindung dienen. Durch die langlochartige Ausbildung der Durchbrüche 66 und 67 wird eine Höheneinstellung des Querträgers 50 relativ zur Vertikalstütze 60 ermöglicht. Zur Einstellung bzw. Fixierung des Neigungswinkels α dienen die beiden Stützstreben 18 und 19. Diese sind über ihre entsprechenden Lageraugen 28 und 29 mit dem jeweils zugeordneten Langloch 68 bzw. 69 der Querwand 63 der Vertikalstütze 60 verschraubt. Durch diese Langlöcher 68, 69 ist einerseits der Neigungswinkel α in gewissen Grenzen variabel einstellbar und andererseits ist auch die Höheneinstellbarkeit des Querträgers 50 auf der Vertikalstütze 60 sicher möglich.

Zur Herstellung einer kompletten Überdachung beispielsweise eines Parkplatzes werden nun mehrere Querträger 50 und Vertikalstützen 60 eingesetzt. Die Vertikalstützen 60 werden voneinander beabstandet im Untergrund verankert. Die aufgesetzten Querträger verlaufen vorzugsweise parallel zueinander. Auf den Querträgern werden nach deren feststehenden Montage auf der jeweils zugehörigen Vertikalstütze Längsträger im Bereich der Montageplatten aufgesetzt, über welche die Querträger miteinander in Verbindung stehen. Anschließend können nun die vorgesehenen Deckplatten, Solarmodule oder Solarkollektoren auf die Längsträger aufgesetzt und mit diesen feststehend verbunden werden.

Durch diese Ausgestaltung, insbesondere des Querträgers 50, ist dessen Montage auf der Vertikalstütze 60 äußerst einfach zu bewerkstelligen. Insbesondere kann diese Montage von einer Einzelperson durchgeführt werden, da der Querträger 50 bei einer Gesamtlänge von 1 m bis 1,5 m ein relativ geringes Eigengewicht aufweist. Durch die vorgesehenen Montageplatten 38, 39 bzw. 40, 41 in den Endbereichen der Querträger 50 ist auch das Aufsetzen von in der Zeichnung nicht dargestellten Längsträgern von einer Person durchführbar, ohne dass die Längsträger, auch bei größeren Neigungswinkeln α des Querträgers bzw. der Querträger 50 zur Horizontalen 70 abrutschen können. Die einstückige Ausbildung des Querträgers 50 und dessen einfache Herstellung durch einfache Schneid- und Biegetechnik ist des Weiteren äußerst kostengünstig, so dass ein stabiles, preiswertes und leicht zu montierendes Tragsystem zur Verfügung gestellt wird.

## Patentansprüche

1. Tragsystem mit einem auf einer Vertikalstütze (60) in unterschiedlichen Winkelpositionen (Neigungswinkel α) zur Vertikalstütze (60) aufsetzbaren Querträger (50), welcher durch wenigstens eine Stützstrebe (18, 19) in der vorgesehenen Winkelposition (Neigungswinkel α) abstützbar ist,
**dadurch gekennzeichnet,**
**dass** der Querträger (50) aus einem gebogenen Blechbauteil (1) besteht, und
**dass** die Stützstrebe (18, 19) aus einem Wandelement (16) des Blechbauteils (1) ausgeschnitten und mit dem Wandelement (16) mit einem Endbereich (20, 21) über wenigstens einen Verbindungsabschnitt (22, 23, 24, 25) in Verbindung steht, und dass die Stützstrebe (18, 19) aus dem Wandelement (16) durch Biegen des Verbindungsabschnittes (22, 23, 24, 25) in eine Stützposition bringbar ist, in welcher der an der Vertikalstütze (60) in einer vorbestimmten Winkelstellung (Neigungswinkel α) angeordnete Querträger (50) abstützbar ist.

2. Tragsystem nach Anspruch 1, **dadurch gekennzeichnet, dass** die Stützstrebe (18, 19) in ihrem freien, dem Verbindungsabschnitt (22, 23, 24, 25) gegenüberliegenden Endbereich (26, 27) ein Montageauge (28, 29) aufweist, welches in der Stützposition der Stützstrebe (18, 19) im Wesentlichen parallel zur Vertikalstütze (60) verlaufend abgebogen und mit einem Durchbruch (30, 31) versehen ist, über welchen das Montageauge (28, 29) mit der Vertikalstütze (60) verschraubbar ist.

3. Tragsystem nach Anspruch 1 oder 2, **dadurch gekennzeichnet, dass** die Stützstrebe (18, 19) eine profilierte Querschnittsform aufweist.

4. Tragsystem nach einem der Ansprüche 1 bis 3, **dadurch gekennzeichnet, dass** der Querträger (50) ein U-förmiges oder C-förmiges Querschnittsprofil aufweist, und
dass das Wandelement (16), aus welchem die Stützstrebe (18, 19) ausgeschnitten und abgebogen ist, in Einbaulage des Querträgers (50) an der Vertikalstütze (60) quer zur Vertikalstütze (60) verläuft, und
dass am Wandelement (16) des Querträgers (50) zwei etwa rechtwinklig abgebogene Seitenwände (14, 15) vorgesehen sind, welche zur Montage an der Vertikalstütze (60) jeweils ein mit einem Durchbruch (6) oder einer Durchgangsbohrung (7) versehenes Lagerauge (4, 5) bilden.

5. Tragsystem nach einem der Ansprüche 1 bis 4, **dadurch gekennzeichnet, dass** der Verbindungsabschnitt (22, 23, 24, 25) zwischen dem Wandelement (16) und der Stützstrebe (18, 19) bezüglich seines Biegewiderstandsmomentes derart ausgestaltet ist, dass die Stützstrebe (18, 19) manuell aus der Ebene (51) des Wandelementes (16) herausbiegbar ist.

6. Tragsystem nach einem der Ansprüche 1 bis 5, **dadurch gekennzeichnet, dass** der Querträger (50) in wenigstens einem seiner Endbereiche (32, 33) mit wenigstens einer aus dem Wandelement (16) ausgeschnittenen Montageplatte (38, 39, 40, 41) versehen ist, welche aus der Ebene (51) des Wandelementes (16) herausgebogen ist und in ihrer abgebogenen Position über einen Biegeabschnitt (42, 43, 44, 45) mit dem Wandelement (16) feststehend in Verbindung steht.

7. Tragsystem nach Anspruch 6, **dadurch gekennzeichnet, dass** im jeweiligen Endbereich (32, 33) des Querträgers (50) zwei voneinander beabstandete, aus der Ebene (51) des Wandelementes (16) etwa rechtwinklig abgebogene Montageplatten (38, 39 bzw. 40, 41) vorgesehen sind, welche für eine feststehende Montage eines Längsträgers mit langlochartigen Durchbrüchen (52, 53 bzw. 54, 55) versehen sind.

8. Tragsystem nach einem der Ansprüche 1 bis 7, **dadurch gekennzeichnet, dass** die Vertikalstütze (60) zwei voneinander beabstandete Seitenwände (61, 62) bildet, mit welchen die Vertikalstütze (60) passend in den Querträger (50) einsetzbar ist, und
dass die Seitenwände (61, 62) der Vertikalstütze (60) im Verbindungsbereich zum Querträger (50) langlochartige Durchbrüche (66, 67) aufweisen.

9. Tragsystem nach einem der Ansprüche 1 bis 8, **dadurch gekennzeichnet, dass** die Vertikalstütze (60) aus einem U-förmig oder C-förmig profilierten Blechbauteil gebildet ist.
